# EUROPEAN PATENT SPECIFICATION

(11) **EP 3 996 032 B1**
(45) Date of publication and mention of the grant of the patent: **21.08.2024**
(21) Application number: 21205840.8
(22) Date of filing: 02.11.2021
(51) Int. Cl.: G06T 1/20, G06T 5/40, G06T 5/94

(54) **IMAGE PROCESSING WITH REDUCED LATENCY AND IMPROVED LOCAL PROCESSING**
BILDVERARBEITUNG MIT REDUZIERTER LATENZZEIT UND VERBESSERTER LOKALER VERARBEITUNG
TRAITEMENT DES IMAGES AVEC UNE LATENCE RÉDUITE ET UN TRAITEMENT LOCAL AMÉLIORÉ

(30) Priority: 04.11.2020 US 202017088791
(43) Date of publication of application: 11.05.2022
(73) Proprietor: Renesas Electronics Corporation, Tokyo 135-0061 (JP)
(72) Inventor: HOANG, Quyet, 70000 Ho Chi Minh City (VN); NGUYEN, Hai, 70000 Ho Chi Minh City (VN); LE, Son, 70000 Ho Chi Minh City (VN); IWATA, Kenichi, Tokyo, 135-0061 (JP); SHIBAYAMA, Tetsuya, Tokyo, 135-0061 (JP)
(74) Representative: Betten & Resch

(56) References cited:
- US-A1- 2016 035 069
- US-A1- 2017 026 594
- UREÑA RAQUEL ET AL: "Real-time tone mapping on GPU and FPGA", EURASIP JOURNAL ON IMAGE AND VIDEO PROCESSING, vol. 2012, no. 1, 15 February 2012 (2012-02-15), XP055899867, Retrieved from the Internet <URL:https://jivp-eurasipjournals.springeropen.com/track/pdf/10.1186/1687-5281-2012-1.pdf> DOI: 10.1186/1687-5281-2012-1
- HUYNH KHA MINH ET AL: "16.8 GB/s LPDDR4-3200@32-bit memory access bandwidth", 2017 7TH INTERNATIONAL CONFERENCE ON INTEGRATED CIRCUITS, DESIGN, AND VERIFICATION (ICDV), IEEE, 5 October 2017 (2017-10-05), pages 16 - 21, XP033268569, DOI: 10.1109/ICDV.2017.8188629
- AMBALATHANKANDY PRASOON ET AL: "An Adaptive Global and Local Tone Mapping Algorithm Implemented on FPGA", IEEE TRANSACTIONS ON CIRCUITS AND SYSTEMS FOR VIDEO TECHNOLOGY, IEEE, USA, vol. 30, no. 9, 26 July 2019 (2019-07-26), pages 3015 - 3028, XP011807489, ISSN: 1051-8215, [retrieved on 20200902], DOI: 10.1109/TCSVT.2019.2931510
- YAFEI OU ET AL: "Real-time Tone Mapping: A State of the Art Report", ARXIV.ORG, CORNELL UNIVERSITY LIBRARY, 201 OLIN LIBRARY CORNELL UNIVERSITY ITHACA, NY 14853, 6 March 2020 (2020-03-06), XP081882135, DOI: 10.1109/TCSVT.2021.3060143

## Description

### BACKGROUND

The present invention relates to an image processing device and an image processing method.

Digital images can be subjected to various adjustments through image processing using a computer. For example, a contrast adjustment known as a typical example of such an adjustment technique. It is effective as a means for changing the impression of the whole image by adjusting the brightness of the image. Usually, contrast adjustment of an image is performed by setting a tone curve for converting an input brightness value into an output brightness value.

By adjusting the shape of the tone curve variously, the contrast of the entire target image can be adjusted to a desired shape. In the general contrast adjustment method, since the global processing of performing the conversion of the brightness value by applying a common tone curve to the entire target image is performed, in the case of the target image in which the bright portion and the dark portion coexist, there is a problem that it is impossible to perform good brightness adjustment, the local processing method of performing the brightness adjustment by reflecting the local features of the target image is also employed.

For instance, Ureña et al., "Real-time tone mapping on GPU and FPGA", EURASIP Journal on Image and Video Processing 2012, 2012:1, discloses two parallel implementations of a new algorithm which takes advantage of both global and local approaches to perform tone mapping, contrast enhancement, and glare mitigation on portable and resource-limited devices based on GPU and on FPGA architectures.

In conventional image processing systems, video signal processors (Video Signal Processor, hereinafter VSP) IPs (intellectual property) perform color management by global or local processing of images. The histogram unit measures the histogram and some imaging properties and stores them in a SDRAM. The middleware (hereinafter MW) reads these information and generates parameters for the core to process in a later frame.

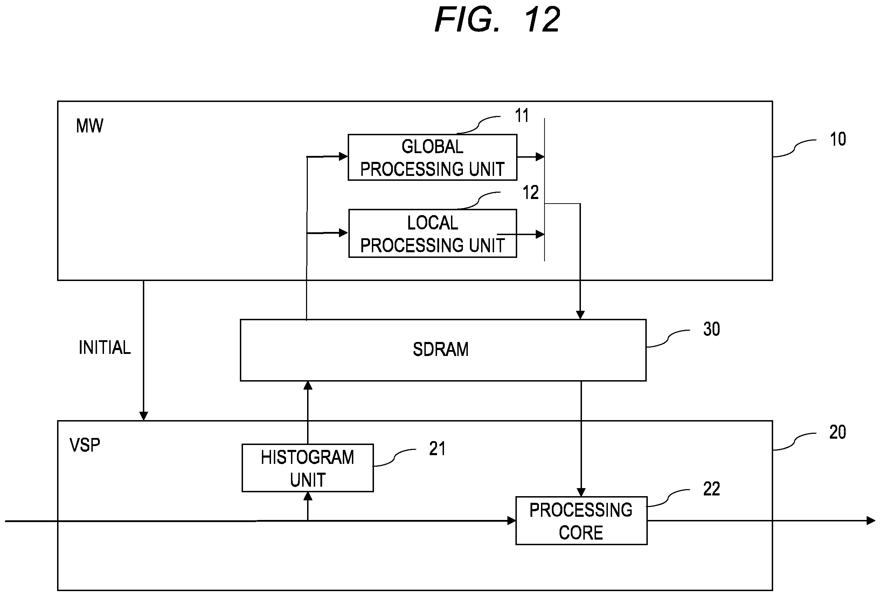

FIG. 12 is a diagram illustrating a configuration of an image processing device according to the prior art; The image processing device has an MW10, a VSP20, an SDRAM30. The MW10 has a global processing unit 11 and a local processing unit 12. The VSP20 includes a histogram measuring unit 21 and a processor core 22. The processor core 22 may be a plurality. The SDRAM30 may be a memory other than an SDRAM.

When the VSP20 reads the image frame, the histogram measuring unit 21 measures the histogram and other image characteristics of the image and stores the measurement result in the SDRAM30. The MW10 reads the stored measurement result from the SDRAM30, the global processing unit 11 for the global area of the image, the local processing unit 12 for the local area performs analysis, respectively, the processor core 22 of the VSP20 generates parameters for processing the image frame, and stores the parameters in the SDRAM30. The processor core 22 in the VSP20 reads the parameters from the SDRAM30 and processes the image frames.

### SUMMARY

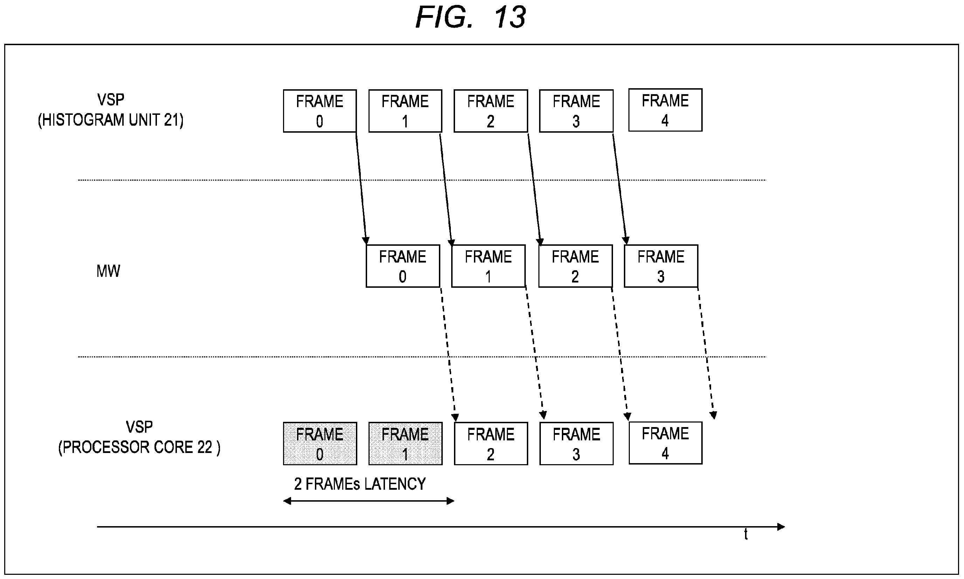

In the image processing device according to the prior art, as shown in FIG. 13, since the image characteristics of the image frame N are analyzed and the parameters of the image frame N + m (m>1) are generated, a latency (m frame) of the image processing is generated. The choice of global and local processing depends on the application and characteristics of the image. Usually, the global process 11 is selected, but if it is detected in the MW10 that the histograms and image properties of the local areas in the image differ greatly, the local process 12 is selected. For example, both bright and dark areas occur together in the image, and the local processing unit 12 is selected for different gamma corrections to these areas to produce a higher contrast image.

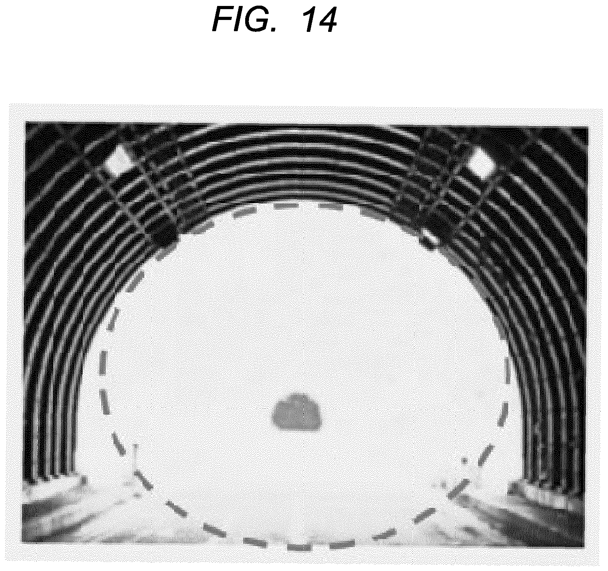

In the case of video sequences where the scene varies greatly from frame to frame, the waiting time of two frames affects the image quality. The reason is that the MW generates parameters using the image characteristics of the frame N and applies these parameters to the frame N+m (m>1), but in this case the parameters generated from the frame N are old for the frame N+m because the details of the frame N and the frame N+m are different. For example, as shown in FIG. 14, in an automobile moving outside the tunnel, an image is recorded by a camera, and light is greatly different inside and outside the tunnel, so that in the region of the tunnel terminal, the contrast of the image becomes high. Since the car is moving, these contrasting regions are changing in each frame (much less depending on the car speed).

For local operations, the number of histogram data and parameters processed by the MW is large, and if the number of local regions increases and/or a higher bit depth is used, it increases. To ensure system performance, several constraints apply, such as a limited number of local areas, where the parameters are not set in full steps, the hardware processing is required for missing parameters, e.g., one component with 12 bits depth, and the look-up table (LUT) data for 4096 elements must be used, but only 257 elements are generated and the remaining elements are interpolated. Therefore, these constraints affect the image quality.

The image processing device according to an embodiment provides a color management system that improves image quality by reducing latency and improving the performance of local processing.

More accurate parameters can be used in image processing.

### BRIEF DESCRIPTION OF THE DRAWINGS

FIG. 1 is a block diagram illustrating a configuration of an image processing device according to a first embodiment.
FIG. 2 is a diagram illustrating a frame process in the image processing device according to the first embodiment.
FIG. 3 is an image for explaining a determination method in the determination unit.
FIG. 4 is an image for explaining another determination method in the determination unit.
FIG. 5 is a diagram for explaining a determination method in the determination unit.
FIG. 6 is an image for explaining an image processing method according to a second embodiment.
FIG. 7 is a block diagram illustrating a configuration of an image processing device according to a second embodiment.
FIG. 8 is a block diagram illustrating a configuration of an image processing device according to modified example of the second embodiment.
FIG. 9 is a diagram for explaining the generation of adaptive parameters (QPs) according to modified example of the second embodiment.
FIG. 10 is a block diagram illustrating a configuration of an image processing device according to a third embodiment.
FIG. 11 is a diagram illustrating a frame process in the image processing device according to a third embodiment.
FIG. 12 is a block diagram illustrating a configuration of an image processing device according to a related art.
FIG. 13 is a diagram illustrating a frame process in the image processing device according to the related art.
FIG. 14 is an image for explaining an image processing method according to the related art.

### DETAILED DESCRIPTION

Hereinafter, a semiconductor device according to an embodiment will be described in detail by referring to the drawings. In the specification and the drawings, the same or corresponding form elements are denoted by the same reference numerals, and a repetitive description thereof is omitted. In the drawings, for convenience of description, the configuration may be omitted or simplified. ,

### (First embodiment)

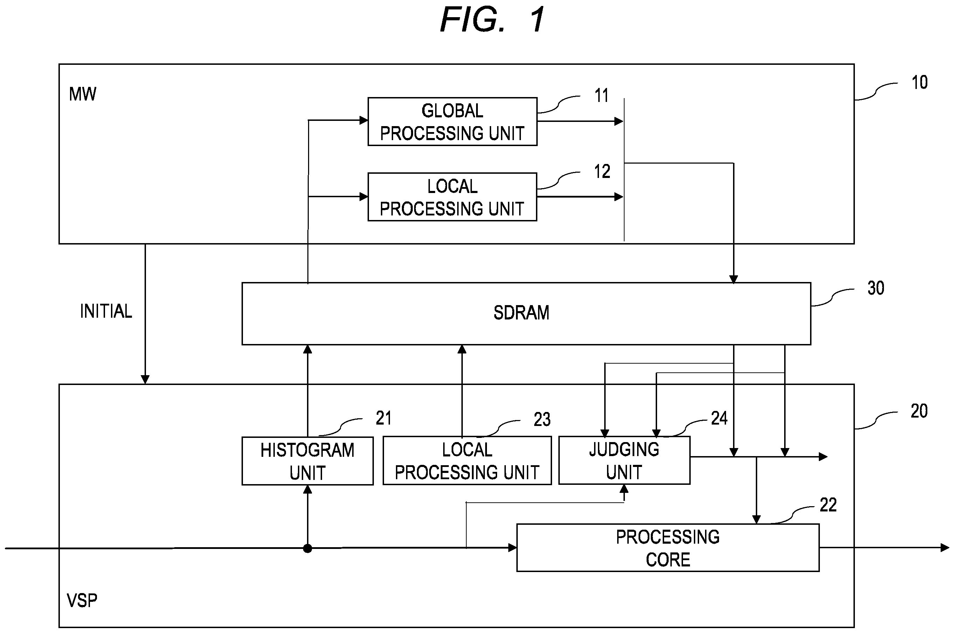

FIG. 1 is a block diagram illustrating a configuration of an image processing device according to a first embodiment.

As shown in FIG. 1, the image processing device has an MW10, a VSP20, an SDRAM30. The MW10 has a global processing unit 11 and a local processing unit 12. The VSP20 includes a histogram measuring unit 21, a processor core 22, a local processing unit 23, and a determination unit 24. The processor core 22 may be a plurality. The SDRAM30 may be a memory other than a SDRAM. The MW10 and the VSP20 are connected to the SDRAM30, and the image processing parameters are exchanged via the SDRAM30.

When the VSP20 reads the image frame, the histogram measuring unit 21 measures the histogram and other image characteristics of the image and stores the measurement result in the SDRAM30. The MW10 reads the stored measurement result from the SDRAM30, the global processing unit 11 for the global area of the image, the local processing unit 12 for the local area performs analysis, respectively, the processor core 22 of the VSP20 generates parameters for processing the image frame, and stores the parameters in the SDRAM30.

In parallel with the processing in the above-described MW10, the local processing unit 23 in the VSP20 performs analysis from the result measured by the histogram measuring unit 21, generates parameters for processing the image frame, and stores the parameters in the SDRAM30. The determination unit 24 selects more appropriate parameters from the parameters generated by the MW10 from the SDRAM30 and the parameters generated by the local processing unit 23, and sends them to the processor core 22. The processor core 22 processes the image frames from the received parameters.

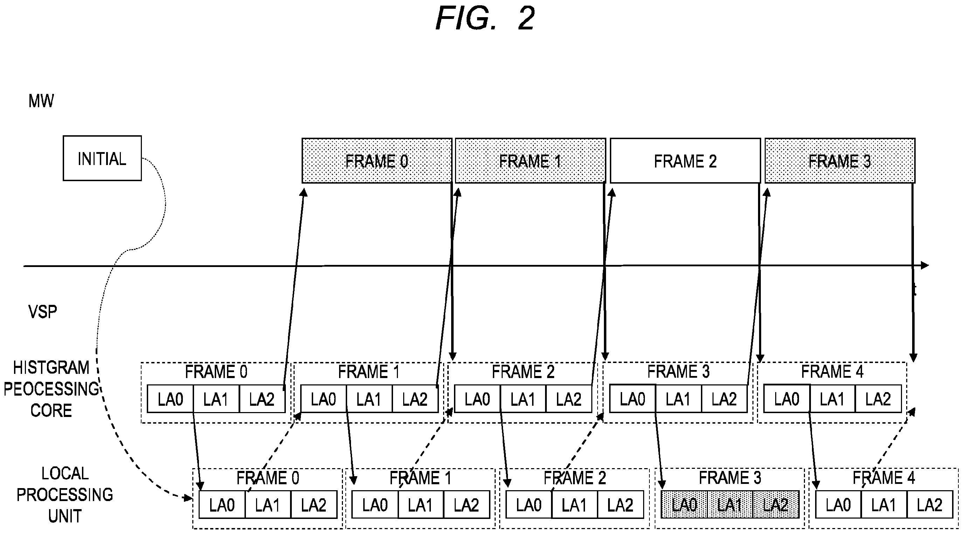

The latency reduction in the image processing device of the first embodiment will be described with reference to FIG. 2. The VSP20 reads a frame (FRAME0) containing a plurality of local areas (LA0~LA2), and the local processor 23 analyzes the histogram data of the local area LAO, generates the local area parameters of the local area LAO, and passes them to the processor core 22. The processor core 22 is capable of processing the next frame (FRAME1) according to the generated local area parameters. In this way, the latency of local area processing can be reduced to one frame.

### (Selection of parameters in the determination unit)

Several methods are applicable as a method of parameter selection in the determination unit.

### (1) Determination based on errors

A method of selecting parameters that generate fewer errors at the output. For example, in a backlight local dimming application, the processor core adjusts the input pixels using gain/offset parameters to compensate for the brightness of the dimmed backlight. However, since the gain/offset parameter is generated from the image characteristics of the previous frame, it may cause clipping in the output pixels of the current frame. Therefore, the determination unit 24 checks which parameter of the VSP20 and the MW10 is less error, select the smaller. If both the VSP20 and the MW10 parameters produce the same number of errors, the VSP20 parameters are chosen to reduce latency.

### (2) Judgment based on energy thresholds

Due to the effect of latency reduction, the VSP20 parameters yield better results for video sequences where the image content varies significantly between frames. Detects changes in content in the local area by calculating different energies (color, brightness, contrast, maximum/minimum/average...) of the local area in the previous frame of the frame currently being processed and comparing them with thresholds. If a parameter of the VSP20, which is a higher threshold of different energies, is selected, otherwise, the parameter of the MW10 is selected.

### (3) Judgment based on the location of the local area

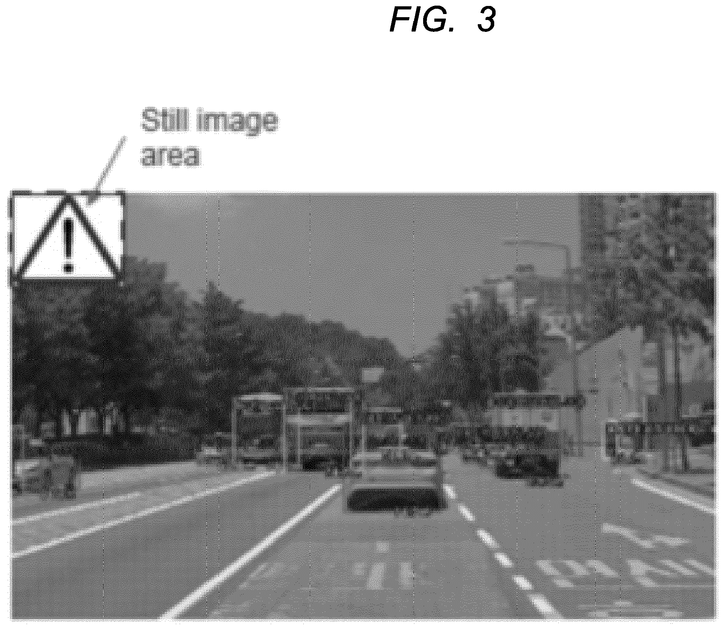

In some applications, the determination can be processed by the position of a different local area for the content in the image. For image blending applications, a video sequence can be blended with a still image. For example, as shown in FIG. 3, the region position of the still image can use the parameters of the MW that are not changed in real time, while the area position of the video sequence can use the parameters of the VSP.

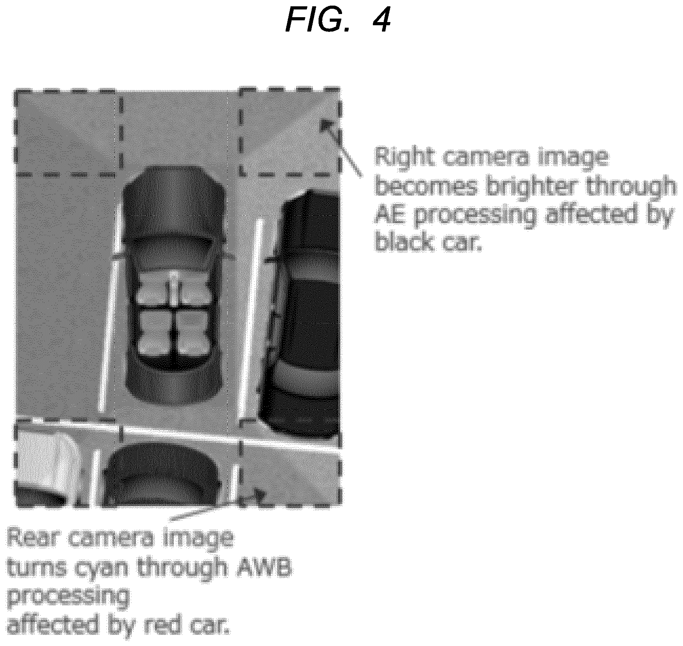

Also, as shown in FIG. 4, for surround view applications, there is a boundary in the four corner areas of the image due to the difference in brightness and color caused by automatic exposure (AE) and automatic white balance (AWB) between cameras that may capture different conditions of the environment. Therefore, the parameters of the VSP can be used because these regions require local processing to significantly change data and equalize differences compared to other regions.

### (4) Motion-based judgment

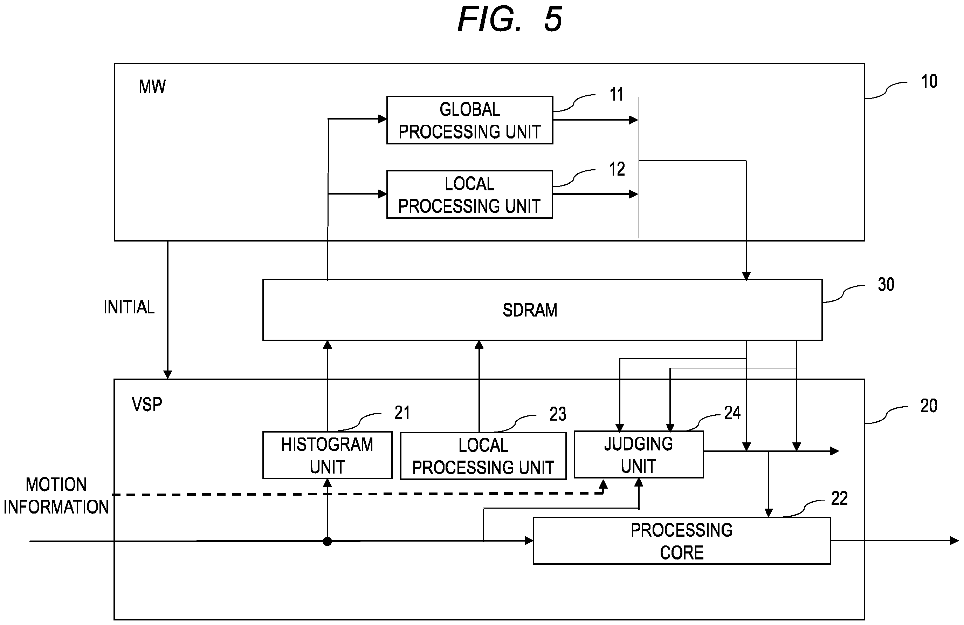

To determine the parameters of the VSP or the MW to be used, a motion object between frames within the local area is detected. If the local area has a moving object, it is desirable to select a parameter from the VSP. As shown in FIG. 5, the information of the motion object is input from the outside to the determination unit 24.

### (Second embodiment)

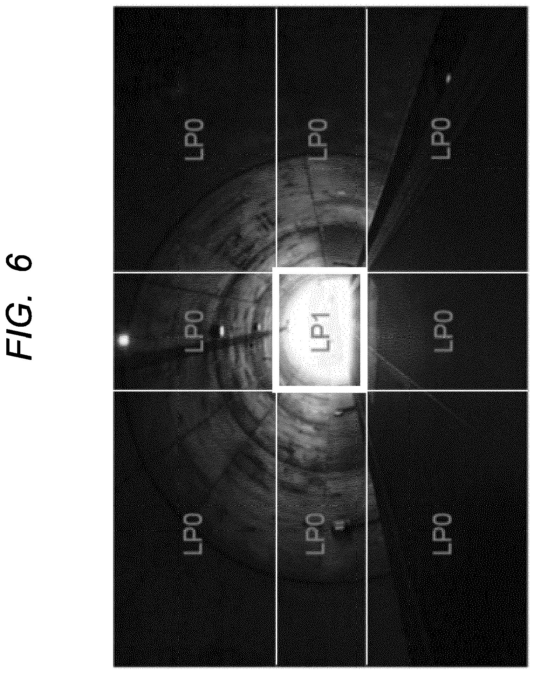

For local processing, more local areas and higher bit depths result in better image quality. However, if the number of local areas (LAs) increases and/or higher bit depths are used, the number of histogram data and parameters increases accordingly. Therefore, bus bandwidth and system performance may be a problem. To solve this problem, the number of local parameters (LPs) is reduced by keeping the same parameters in one frame. Based on the image characteristics, in some cases, the LP may be the same for some LAs. Therefore, VSP does not need to read the LP set again if the LP set is the same as the previous LA. As an example, in FIG. 6, there are nine LAs in the image, but only two LP settings are required. One is for LA at the entrance (LP1) of the tunnel, and the other is for the remaining LA in the picture.

Besides the methods described above to reduce the number of LP sets, LP size in the LA can be reduced by using data compression, and there are two methods of compression.

### (1) Lossless Compressed LLCs (Lossless Compression)

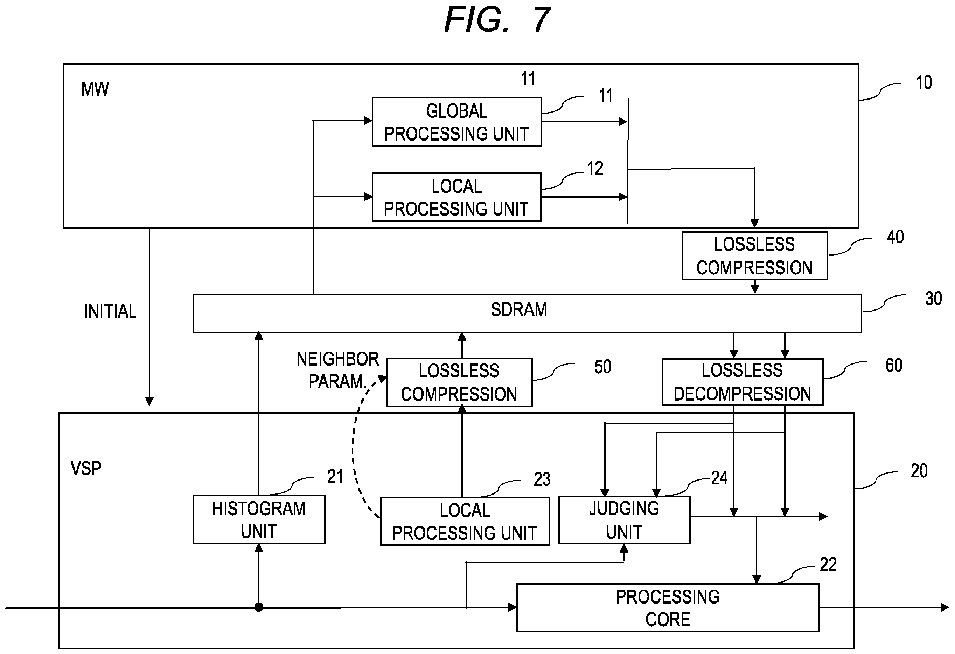

Usually, lossless compression uses DPCM methods to encode different incoming data inside LAs. However, the parameters do not always change dramatically for neighboring LAs as in the example above, but may be small changes. Therefore, the LLC can take different parameters of the two LAs for encoding to improve the compression rate. As shown in FIG. 7, in addition to the parameters of the current LA, the LLC block also reads the parameters of the adjacent LA to compute the difference data. (shown in FIG. 7)

### (2) LUT(Look-up Table) Data-based LSCs (Lossy Compression)

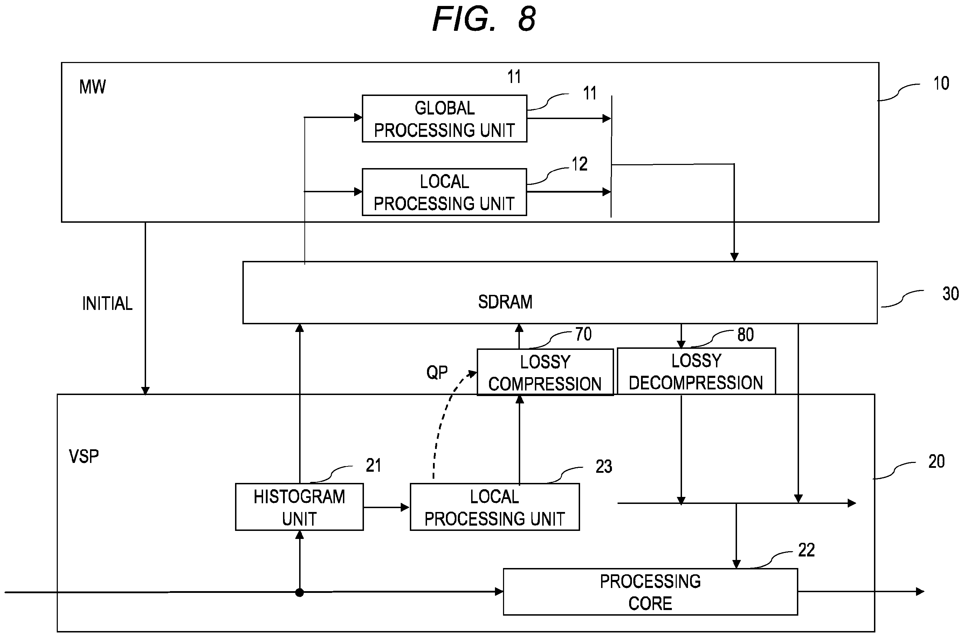

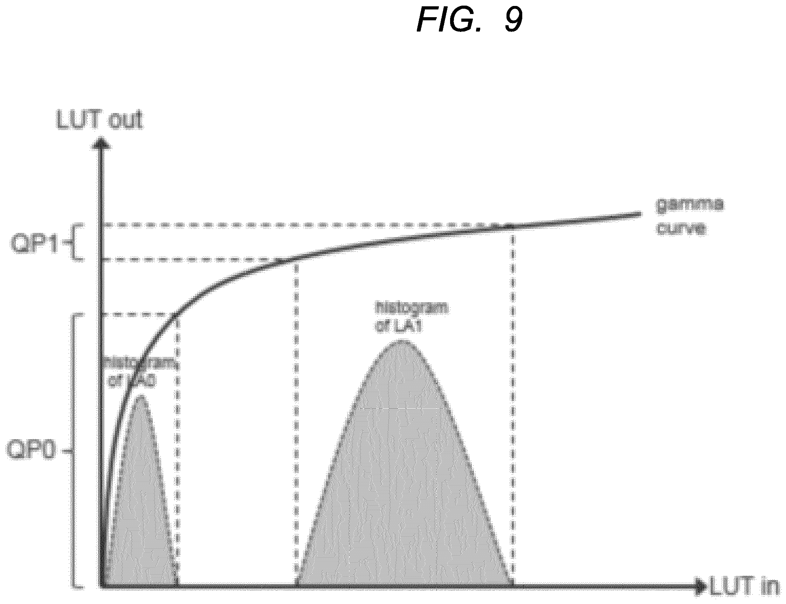

LUT data is converted image data, which is used for the conversion of nonlinear data and can be compressed in an irreversible manner. In LSC, the quality and compression rate depend greatly on the quantization method of the difference data. In this proposal, an adaptive quantization parameter (QP:Quantization Parameter) can be generated for each LA from histogram data and a nonlinear transformation curve (e.g., gamma) of the LUT to improve the quality of compression, (shown in FIG. 8) For example, in the chart of FIG. 9, the distribution of LA0 and LA1 image data lies in different regions and depends on each region output. Different coded QPs should be selected (LA1 have QP1 for finer steps of quantization). Therefore, the local processing unit 23, together with the LUT data, also generates a QP for LSC.

According to the image processing device according to the second embodiment, by reducing the number of local parameters or reducing the size of the local parameter, it is possible to reduce the bus bandwidth used, thereby improving the performance of the image processing.

### (Third embodiment)

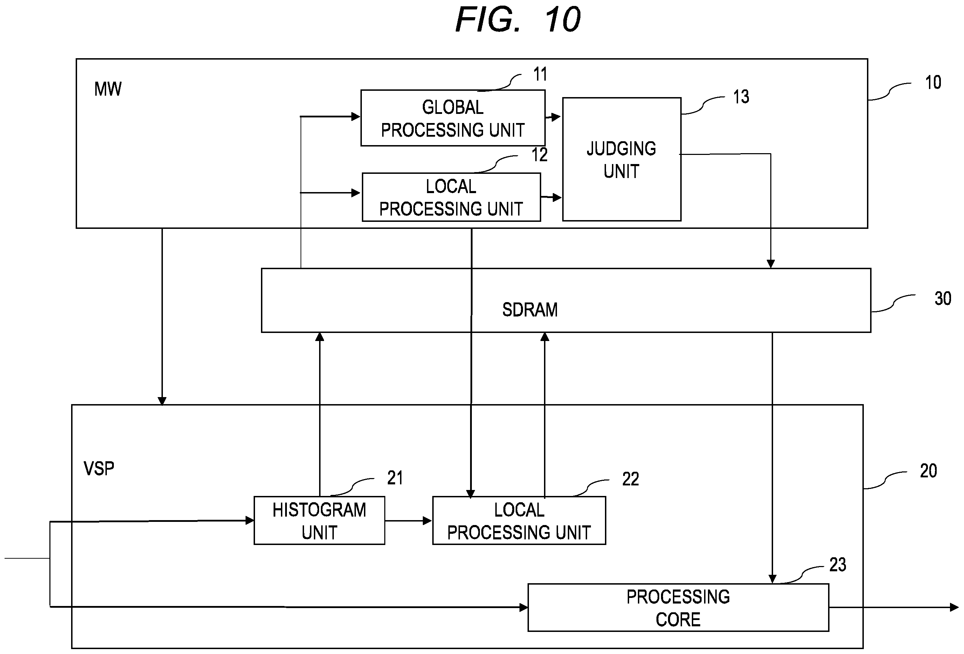

FIG. 10 is a block diagram illustrating a configuration of an image processing device according to a third embodiment.

As shown in FIG. 10, the image processing device has an MW10, a VSP20, an SDRAM30. The MW10 has a global processing unit 11 and a local processing unit 12. The VSP20 includes a histogram measuring unit 21, a processor core 23, and a local processing unit 22. The processor core 23 may be a plurality. The SDRAM30 may be a memory other than a SDRAM. The MW10 and the VSP20 are connected to the SDRAM30, and the image processing parameters are exchanged via the SDRAM30. The difference from the first embodiment, which is that the determination unit 13 is placed on the MW10, in addition to the first embodiment, is to select a parameter from among HW or MW by the determination of the MW10. It controls to update the operation of the local processing unit 22 of the VSP20. After the change, the parameters from the VSP20 are re-selected for later frames.

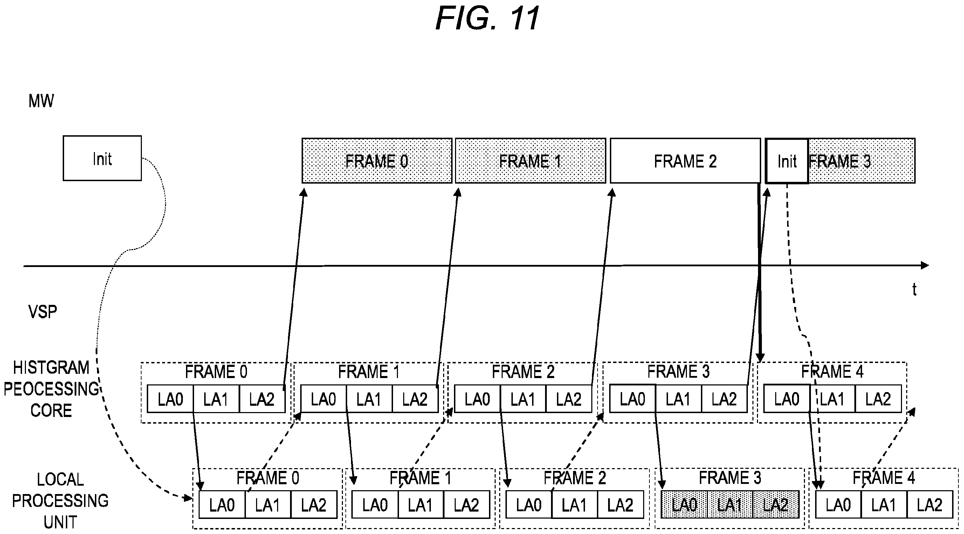

FIG. 11 illustrates an example of a processing pipeline of this method, wherein the MW10 initializes the local processing unit 22 of the VSP20 at the beginning, and the use parameters of frames 1, 2, and 3 are generated by the local processing unit 22 of the VSP20 at one frame waiting time. In frame 4, parameters from the MW10 are used, and the MW10 updates the operating mode of the local processing unit 22 of the VSP20 to accommodate that change from frame 4. After frame 5, the parameters from the local processing unit 22 of the VSP20 are used until the MW10 changes newly.

In addition, even when a specific numerical value example is described, it may be a numerical value exceeding the specific numerical value, or may be a numerical value less than the specific numerical value, except when it is theoretically obviously limited to the numerical value. In addition, the component means "B containing A as a main component" or the like, and the mode containing other components is not excluded.

## Claims

1. An image processing device for processing an image input signal containing a plurality of frames, the device comprising a memory (30), a first image processing unit (20) and a second image processing unit (10),
wherein the first image processing unit (20) includes
means for reading a frame containing a plurality of local areas;
a histogram processing unit (21) for extracting histogram data and other image characteristic data from the frame, and storing an extraction result in the memory (30), the other image characteristic data being at least color, brightness, and contrast, the local areas having histogram data and the other image characteristic data that differ greatly;
a first local processing unit (23) for performing analysis of the extraction result by the histogram processing unit (21) with respect to one of the plurality of local areas of the frame, and creating a first parameter group to be used for performing image processing on a frame; and
an arithmetic processing unit (22) for creating an image output frame by processing the frame,
wherein the second image processing unit (10) includes
means for reading the extraction result from the memory (30); and
a second local processing unit (12) for performing analysis of the read extraction result with respect to the plurality of local areas of the frame, and creating a second parameter group to be used for performing image processing on a frame,
wherein the first image processing unit (20) further includes a determination unit (24) for selecting an image processing parameter group to be used for image processing from the first parameter group and the second parameter group,
wherein the arithmetic processing unit (22) performs image processing on a current frame according to the image processing parameter group selected by the determination unit (24) by applying to the current frame either the first parameter group generated with respect to a previous frame which is prior to the current frame by one frame or the second parameter group generated with respect to a previous frame which is prior to the current frame by two frames.

2. The image processing device according to claim 1,
wherein the determination unit (24) selects the other image characteristic data from among the first parameter group and the second parameter group by comparing the other image characteristic data with a predetermined threshold value.

3. The image processing device according to claim 1,
wherein the determination unit (24) selects, among the first parameter group and the second parameter group, according to a position of each local area.

4. The image processing device according to claim 1,
wherein the determination unit (24) selects one of the first parameter group and the second parameter group according to a motion object detected between frames within each local area.

5. The image processing device according to claim 1,
wherein the first image processing unit (20) further includes a first compression unit (50; 70) for compressing the first parameter group and outputting a first compression parameter group,
wherein the second image processing unit (10) further includes a second compression unit (40) for compressing the second parameter group and outputting a second compression parameter group, and
wherein the first image processing unit (20) further includes a decompression unit (60; 80) for decompressing the first compression parameter group and the second compression parameter group.

6. The image processing device according to claim 5,
wherein the first compression unit (50) and the second compression unit (40) use a lossless compression method.

7. The image processing device according to claim 5,
wherein the first compression unit (70) and the second compression unit use a lossy compression method using a look-up table.

## Patentansprüche

1. Bildverarbeitungsvorrichtung zum Verarbeiten eines Bildeingabesignals, das eine Vielzahl von Einzelbildern enthält, wobei die Vorrichtung einen Speicher (30), eine erste Bildverarbeitungseinheit (20) und eine zweite Bildverarbeitungseinheit (10) umfasst,
wobei die erste Bildverarbeitungseinheit (20) folgendes enthält:
Mittel zum Lesen eines Einzelbildes, das eine Vielzahl von örtlichen Bereichen enthält;
eine Histogramm-Verarbeitungseinheit (21) zum Extrahieren von Histogrammdaten und anderen Bildcharakteristikdaten aus dem Einzelbild und Speichern eines Extraktionsergebnisses im Speicher (30), wobei die anderen Bildcharakteristikdaten wenigstens Farbe, Helligkeit und Kontrast sind, wobei die örtlichen Bereiche Histogrammdaten und die anderen Bildcharakteristikdaten haben, die sich stark unterscheiden;
eine erste örtliche Verarbeitungseinheit (23) zum Durchführen einer Analyse des Extraktionsergebnisses durch die Histogramm-Verarbeitungseinheit (21) in Bezug auf einen der Vielzahl von örtlichen Bereichen des Einzelbildes und Erstellen einer ersten Parametergruppe, um zum Durchführen einer Bildverarbeitung an einem Einzelbild verwendet zu werden; und
eine Arithmetik-Verarbeitungseinheit (22) zum Erstellen eines Bildausgabe-Einzelbildes durch Verarbeiten des Einzelbildes,
wobei die zweite Bildverarbeitungseinheit (10) folgendes enthält:
Mittel zum Lesen des Extraktionsergebnisses aus dem Speicher (30); und
eine zweite örtliche Verarbeitungseinheit (12) zum Durchführen einer Analyse des gelesenen Extraktionsergebnisses in Bezug auf die Vielzahl von örtlichen Bereichen des Einzelbildes und Erstellen einer zweiten Parametergruppe, um zum Durchführen einer Bildverarbeitung an einem Einzelbild verwendet zu werden,
wobei die erste Bildverarbeitungseinheit (20) weiterhin eine Bestimmungseinheit (24) zum Auswählen einer Bildverarbeitungsparametergruppe, um zur Bildverarbeitung verwendet zu werden, aus der ersten Parametergruppe und der zweiten Parametergruppe enthält,
wobei die Arithmetik-Verarbeitungseinheit (22) eine Bildverarbeitung an einem aktuellen Einzelbild gemäß der durch die Bestimmungseinheit (24) ausgewählten Bildverarbeitungsparametergruppe durch Anwenden von entweder der in Bezug auf ein vorheriges Einzelbild, das um ein Einzelbild vor dem aktuellen Einzelbild ist, erzeugten ersten Parametergruppe oder der in Bezug auf ein vorheriges Einzelbild, das um zwei Einzelbilder vor dem aktuellen Einzelbild ist, erzeugten zweiten Parametergruppe auf das aktuelle Einzelbild durchführt.

2. Bildverarbeitungsvorrichtung nach Anspruch 1,
wobei die Bestimmungseinheit (24) die anderen Bildcharakteristikdaten durch Vergleichen der anderen Bildcharakteristikdaten mit einem vorbestimmten Schwellenwert zwischen der ersten Parametergruppe und der zweiten Parametergruppe auswählt.

3. Bildverarbeitungsvorrichtung nach Anspruch 1,
wobei die Bestimmungseinheit (24) gemäß einer Position von jedem örtlichen Bereich zwischen der ersten Parametergruppe und der zweiten Parametergruppe auswählt.

4. Bildverarbeitungsvorrichtung nach Anspruch 1,
wobei die Bestimmungseinheit (24) eine der ersten Parametergruppe und der zweiten Parametergruppe gemäß einem zwischen Einzelbildern innerhalb jedes örtlichen Bereichs erfassten Bewegungsobjekt auswählt.

5. Bildverarbeitungsvorrichtung nach Anspruch 1,
wobei die erste Bildverarbeitungseinheit (20) weiterhin eine erste Kompressionseinheit (50; 70) zum Komprimieren der ersten Parametergruppe und Ausgeben einer ersten Kompressionsparametergruppe enthält,
wobei die zweite Bildverarbeitungseinheit (10) weiterhin eine zweite Kompressionseinheit (40) zum Komprimieren der zweiten Parametergruppe und Ausgeben einer zweiten Kompressionsparametergruppe enthält, und
wobei die erste Bildverarbeitungseinheit (20) weiterhin eine Dekompressionseinheit (60; 80) zum Dekomprimieren der ersten Kompressionsparametergruppe und der zweiten Kompressionsparametergruppe enthält.

6. Bildverarbeitungsvorrichtung nach Anspruch 5,
wobei die erste Kompressionseinheit (50) und die zweite Kompressionseinheit (40) ein verlustfreies Kompressionsverfahren verwenden.

7. Bildverarbeitungsvorrichtung nach Anspruch 5,
wobei die erste Kompressionseinheit (70) und die zweite Kompressionseinheit ein verlustbehaftetes Kompressionsverfahren unter Verwendung einer Nachschlagetabelle verwenden.

## Revendications

1. Un dispositif de traitement d'image pour traiter un signal d'entrée d'image contenant une pluralité de trames, le dispositif comprenant une mémoire (30), une première unité (20) de traitement d'images et une deuxième unité (10) de traitement d'image,
la première unité (20) de traitement d'images comprenant
des moyens pour lire une trame contenant une pluralité de zones locales ;
une unité (21) de traitement d'histogramme, pour extraire de la trame des données d'histogramme et d'autres données caractéristiques d'image, et pour stocker un résultat d'extraction dans la mémoire (30), les autres données caractéristiques d'image étant au moins la couleur, la luminosité et le contraste, les zones locales ayant des données d'histogramme et d'autres données caractéristiques d'image qui diffèrent grandement ;
une première unité (23) de traitement local, pour effectuer une analyse du résultat d'extraction par l'unité (21) de traitement d'histogramme par rapport à une zone locale de la pluralité de zones locales de la trame, et pour créer un premier groupe de paramètres à utiliser pour effectuer un traitement d'image sur une trame ; et
une unité (22) de traitement arithmétique, pour créer une trame de sortie d'image en traitant la trame,
la deuxième unité (10) de traitement d'images comprenant
des moyens pour lire le résultat d'extraction à partir de la mémoire (30) ; et
une deuxième unité (12) de traitement local, pour effectuer une analyse du résultat d'extraction lu par rapport à la pluralité de zones locales de la trame, et créer un deuxième groupe de paramètres à utiliser pour effectuer un traitement d'image sur une trame,
la première unité (20) de traitement d'images comprenant en outre une unité de détermination (24) pour sélectionner un groupe de paramètres de traitement d'image à utiliser pour le traitement d'image parmi le premier groupe de paramètres et le deuxième groupe de paramètres,
l'unité (22) de traitement arithmétique effectuant un traitement d'image sur une trame actuelle selon le groupe de paramètres de traitement d'image sélectionné par l'unité de détermination (24) en appliquant à la trame actuelle soit le premier groupe de paramètres généré par rapport à une trame précédente qui est antérieure d'une trame à la trame actuelle, soit le deuxième groupe de paramètres généré par rapport à une trame précédente qui est antérieure de deux trames à la trame actuelle.

2. Le dispositif de traitement d'image selon la revendication 1,
dans lequel l'unité de détermination (24) sélectionne les autres données caractéristiques d'image parmi le premier groupe de paramètres et le deuxième groupe de paramètres en comparant les autres données caractéristiques d'image avec une valeur seuil prédéterminée.

3. Le dispositif de traitement d'images selon la revendication 1,
dans lequel l'unité de détermination (24) sélectionne, parmi le premier groupe de paramètres et le deuxième groupe de paramètres, en fonction d'une position de chaque zone locale.

4. Le dispositif de traitement d'image selon la revendication 1,
dans lequel l'unité de détermination (24) sélectionne un groupe parmi le premier groupe de paramètres et le deuxième groupe de paramètres en fonction d'un objet en mouvement détecté entre les images dans chaque zone locale.

5. Le dispositif de traitement d'image selon la revendication 1,
dans lequel la première unité (20) de traitement d'images comprend en outre une première unité de compression (50 ; 70) pour compresser le premier groupe de paramètres et délivrer un premier groupe de paramètres de compression,
dans lequel la deuxième unité (10) de traitement d'images comprend en outre une deuxième unité de compression (40) pour compresser le deuxième groupe de paramètres et délivrer un deuxième groupe de paramètres de compression, et
dans lequel la première unité (20) de traitement d'images comprend en outre une unité de décompression (60 ; 80) pour décompresser le premier groupe de paramètres de compression et le deuxième groupe de paramètres de compression.

6. Le dispositif de traitement d'images selon la revendication 5,
dans lequel la première unité de compression (50) et la deuxième unité de compression (40) utilisent un procédé de compression sans perte.

7. Le dispositif de traitement d'image selon la revendication 5,
dans lequel la première unité de compression (70) et la deuxième unité de compression utilisent un procédé de compression avec perte utilisant une table de correspondance.
